# EUROPÄISCHE PATENTSCHRIFT

(11) **EP 3 789 833 B1**
(45) Veröffentlichungstag und Bekanntmachung des Hinweises auf die Patenterteilung: **06.12.2023**
(21) Anmeldenummer: 20185885.9
(22) Anmeldetag: 15.07.2020
(51) Int. Cl.: B23Q 17/00, G05B 19/4065, B23Q 3/00

(54) **VERFAHREN ZUR ÜBERWACHUNG EINER WERKZEUGSPANNVORRICHTUNG**
METHOD FOR MONITORING A TOOL CLAMPING DEVICE
PROCÉDÉ DE SURVEILLANCE D'UN DISPOSITIF DE SERRAGE D'OUTIL

(30) Priorität: 05.09.2019 DE 102019123838
(43) Veröffentlichungstag der Anmeldung: 10.03.2021
(73) Patentinhaber: Ott-Jakob Spanntechnik GmbH, 87663 Lengenwang (DE)
(72) Erfinder: Aschauer, Florian, 83471 Schönau a. K. (DE); Merz, Florian, 87668 Rieden (DE); Bechteler, Wolfgang, 87640 Ebenhofen (DE); Greif, Josef, 87654 Friesenried (DE)
(74) Vertreter: Charrier Rapp & Liebau

(56) Entgegenhaltungen:
- EP-A1- 2 138 253
- EP-A1- 3 241 650
- DE-A1-102015 116 347
- US-A1- 2008 006 101

## Beschreibung

Die Erfindung betrifft ein Verfahren zur Überwachung einer in eine Arbeitsspindel eingebauten Werkzeugspannvorrichtung nach dem Oberbegriff des Anspruchs 1.

Der Zustand eines Spannsystems wird typischerweise vor Auslieferung an den Kunden mit Hilfe eines Prüfstands protokolliert. Dabei werden Kenngrößen wie eine Federkonstante oder Reibungswerte ermittelt. Diese Kenngrößen ändern sich in bestimmten Maß durch Einbau und Betrieb des Spannsystems in einer Spindel. Ursache für Abweichungen sind Alterungsprozesse, Verschleiß oder Ausfall einzelner Komponenten wie beispielsweise eines Federelements oder der unsachgemäße Einbau sowie Betrieb. Aktuell gibt es die Möglichkeit die Lebensdauer des Spannsystems im eingebauten Zustand über einen Langzeitversuch vorherzusagen. Das ist jedoch aufwendig, teuer und unterschiedliche Fertigungstoleranzen lassen sich nur schwer berücksichtigen. Diese Vorgehensweise ist bei Sonderspindeln, welche nur in geringer Stückzahl gefertigt werden, nicht wirtschaftlich. Folglich werden Fehler oft erst während des Betriebs der Werkzeugmaschine festgestellt, was in hohen Folgekosten resultiert.

Zur Überwachung einer Werkzeugspannvorrichtung im Betrieb ist aus der DE 10 2016 108 407 A1 die Ausrüstung der zugehörigen Löseeinrichtung mit Positionssensoren bekannt. Hierdurch wird es jedoch nur ermöglicht festzustellen, ob sich das Spannsystem tatsächlich im gespannten oder im gelösten Zustand befindet und somit zu überwachen, ob die Werkzeugspannvorrichtung auf Stellbefehle der Maschinensteuerung der Bearbeitungsmaschine, in deren Arbeitsspindel die Werkzeugspannvorrichtung eingebaut ist, korrekt reagiert. Eine schleichende Verschlechterung von funktionsrelevanten Kenngrößen der Werkzeugspannvorrichtung kann hingegen nicht erkannt werden.

Die DE 10 2015 116 347 A1 lehrt eine Hauptspindelvorrichtung für eine Werkzeugmaschine, bei der zur Erkennung eines Nachlassens der durch ein Federnpaket aufgebrachten Spannkraft der Werkzeugspannvorrichtung an deren hydraulischer Lösevorrichtung während des Spannvorgangs eine Messung vorgenommen wird, deren Ergebnis als Maß für die Spannkraft betrachtet wird. Gemessen wird entweder ein Zeitintervall, innerhalb dessen der Hydraulikdruck der Lösevorrichtung beim Spannvorgang um ein vorbestimmtes Ausmaß absinkt, oder der Hydraulikdruck, bei dem der Hydraulikkolben der Lösevorrichtung beim Spannvorgang eine vorbestimmte Position erreicht. Es wird also jeweils nur ein einziger Messwert eines Zeitintervalls oder eines Hydraulikdrucks als Maß für die Spannkraft der Werkzeugspannvorrichtung herangezogen.

Die Aufgabe der Erfindung ist es, einen neuen Weg zu einer Überwachung einer Werkzeugspannvorrichtung während ihres Betriebs in einer Arbeitsspindel einer Bearbeitungsmaschine aufzuzeigen, die eine frühzeitige Erkennung von Verschleiß und anderen Funktionsstörungen ermöglicht, bevor sie die Qualität der Werkstückbearbeitung beeinträchtigen.

Diese Aufgabe wird erfindungsgemäß durch ein Verfahren mit den Merkmalen des Anspruchs 1 gelöst. Vorteilhafte Ausgestaltungen sind in den Unteransprüchen angegeben.

Erfindungsgemäß werden bei einem Verfahren zur Überwachung einer in eine Arbeitsspindel eingebauten Werkzeugspannvorrichtung, deren Spannkraft durch eine Federanordnung erzeugt wird, die auf ein das Spannen oder Lösen eines Werkzeugs oder Werkzeughalters bewirkendes Betätigungselement eine Kraft in Richtung der Spannstellung ausübt, beim Lösen und/oder beim Spannen eines Werkzeugs oder Werkzeughalters die Federkraft und der Weg des Betätigungselementes fortlaufend gemessen und jeweils als Funktionen der Zeit aufgezeichnet, und aus diesen aufgezeichneten Funktionen wird mindestens ein für den Zustand der Werkzeugspannvorrichtung charakteristischer Parameter ermittelt, wobei aus der Federkraft und dem Weg als Funktionen der Zeit eine Federkennlinie in Form der Federkraft als Funktion des Weges ermittelt wird. Bei einer Abweichung eines charakteristischen Parameters von einem Referenzwert, die ein vorbestimmtes Maß überschreitet oder in anderer Weise einen Defekt anzeigt, wird eine Meldung an eine den Betrieb der Arbeitsspindel steuernde elektronische Steuereinrichtung gesendet und/oder mittels einer Anzeigeeinrichtung ein optisches und/oder akustisches Warnsignal für Bedienpersonal ausgegeben.

Die periodische Messung der Federkraft und des Weges des Betätigungselementes im laufenden Betrieb erlaubt eine kontinuierliche Überwachung der Funktionstüchtigkeit der Werkzeugspannvorrichtung. Aus diesen Daten können mehrere verschiedene Parameter ermittelt werden, die Aufschluss über eine Vielzahl von Zustandsmerkmalen einer Werkzeugspannvorrichtung geben. Eine Unterbrechung des Betriebs der Arbeitsspindel zur Durchführung der zur Überwachung nötigen Messungen ist nicht notwendig. Die erfindungsgemäß ermittelte Federkennlinie ist ein grundlegender Bestandteil der Funktionsbeschreibung einer auf Federkraft basierenden Werkzeugspannvorrichtung. Sie beinhaltet etliche charakteristische Parameter, welche den funktionalen Zustand einer solchen Werkzeugspannvorrichtung kennzeichnen. Ein weiterer Betrieb der Arbeitsspindel mit fehlerhafter oder unzulässig verminderter Qualität der Werkstückbearbeitung kann durch die Erfindung vermieden werden.

Die einfachste Form der Auswertung einer Federkennlinie ist die Ermittlung der bei einem vorbestimmten Weg wirkenden Federkraft als charakteristischer Parameter. Ein von einem konstruktionsbedingten Erwartungswert zu stark abweichender Wert ist bereits ein erstes Indiz für einen Defekt.

Darüber hinaus kann als charakteristischer Parameter aus der Federkraft als Funktion des Weges innerhalb eines vorbestimmten Bereiches des Weges eine Federkonstante berechnet werden, wobei der vorbestimmte Bereich des Weges derjenige Bereich ist, in dem die Federkennlinie annähernd linear verläuft. Auch für die Federkonstante ist ein konstruktionsbedingter Erwartungswert bekannt. Eine zu große Abweichung von diesem zeigt ebenfalls einen Defekt an. Anstelle einer Federkonstante kann auch ein Korrelationsfaktor, welcher ein Maß für die Ähnlichkeit zwischen der Federkraft als Funktion des Weges und einer vorbestimmten Funktion darstellt, berechnet werden. Die vorbestimmte Funktion ist in diesem Fall ein konstruktionsbedingt erwarteter Kennlinienverlauf, der auch nichtlinear sein kann.

Wenn ein vollständiger Zyklus des Lösens und Spannens durchlaufen wird, kann als charakteristischer Parameter die dabei in Wärme umgewandelte Verlustenergie oder der Quotient aus der dabei in Wärme umgewandelten Verlustenergie und der dabei insgesamt aufgewendeten Arbeit berechnet werden. Es versteht sich, dass eine möglichst geringe Verlustenergie und ein möglichst geringes Verhältnis derselben zu der bei einem Löse- und Spannzyklus insgesamt aufgewendeten Arbeit erwünscht ist und dass ein zu großer Wert der Verlustenergie oder besagten Quotienten ebenfalls einen Defekt oder zumindest einen Verschleiß an der Werkzeugspannvorrichtung anzeigt.

Als charakteristischer Parameter kann auch ein Maß für die Abweichung der Federkraft als Funktion des Weges von einem linearen Verlauf innerhalb eines ersten vorbestimmten Bereiches des Weges, in dem eine möglichst geringe Abweichung von einem linearen Verlauf erwünscht ist, ermittelt werden. Linearitätsabweichungen entlang der Kennlinie wie insbesondere Oszillationen der Kraft über dem Weg zeigen eine unregelmäßige Bewegung bei der Auslenkung der Federanordnung an, die auf Verschleiß oder ein teilweises Versagen der Schmierung der Lagerung der Federanordnung an.

Bei einem Lösevorgang kann des weiteren als charakteristischer Parameter ein Maß für die Abweichung der Federkraft als Funktion des Weges von einem linearen Verlauf innerhalb eines zweiten vorbestimmten Bereiches des Weges, in dem eine Abweichung vorbestimmten Ausmaßes ein Indiz für ein korrektes Ausstoßen des Werkzeugs oder Werkzeughalters aus der Werkzeugspannvorrichtung darstellt, ermittelt werden. Das korrekte Ausstoßen des Werkzeugs oder Werkzeughalters in einer bestimmten Phase des Lösevorgangs ist für die Funktionstüchtigkeit einer Werkzeugspannvorrichtung von essentieller Bedeutung. Erfindungsgemäß kann durch die gezielte Auswertung eines bestimmten Abschnitts der Federkennlinie auch die Erfüllung dieser Funktion überwacht werden.

Darüber hinaus kann als charakteristischer Parameter auch mindestens ein Zeitintervall zwischen zwei Zeitpunkten ermittelt werden, die vorbestimmten Änderungen des Kurvenverlaufes der Federkennlinie zugeordnet sind. Dies wird durch die bestehende Zuordnung jedes Punktes der Federkennlinie zu einem bestimmten Zeitpunkt innerhalb eines Löse- und Spannzyklus ermöglicht. Die Einhaltung bestimmter zeitlicher Bedingungen ist ein wesentliches Leistungsmerkmal einer Werkzeugspannvorrichtung, da die Dauer eines Löse- und Spannzyklus in die Dauer eines Werkzeugwechsels eingeht. Eine Überschreitung zulässiger Zeitintervalle zeigt ebenfalls einen Defekt einer Werkzeugspannvorrichtung an.

Zeitintervalle, die in diesem Zusammenhang von primärem Interesse sind, sind die Zeit zwischen der elektronischen Initiierung einer zum Lösen des Werkzeugs oder Werkzeughalters führenden Bewegung und dem Beginn dieser Bewegung und/oder die Zeit zwischen dem Beginn einer zum Lösen des Werkzeugs oder Werkzeughalters führenden Bewegung und einer Kraftbeaufschlagung der Federanordnung und/oder die Zeit zwischen einer Kraftbeaufschlagung der Federanordnung und dem Ausstoßen des Werkzeugs oder Werkzeughalters. Die Summe dieser drei Zeiten ergibt die Gesamtzeit, die zum tatsächlichen Ausstoßen des Werkzeugs oder Werkzeughalters vergeht.

Ein weiterer charakteristischer Parameter ist die am Ende eines Lösevorgangs auftretende maximale Kraft, die bei der Begrenzung des Weges des Betätigungselementes durch einen mechanischen Anschlag auftritt. Sie bestimmt den maximalen Druck, den das zum Betrieb der Werkzeugspannvorrichtung benötigte Hydraulikaggregat aufbringen muss, um das Betätigungselement bis zu besagtem Anschlag auslenken zu können.

Der Referenzwert eines für den Zustand der Werkzeugspannvorrichtung charakteristischen Parameters, mit dem der ermittelte Wert dieses Parameters verglichen wird, kann ein fest vorbestimmter Wert oder ein anhand eines früheren Löse- und Spannzyklus ermittelter Wert des charakteristischen Parameters sein, der in einem Datenspeicher einer zur Durchführung des Verfahrens vorgesehenen Überwachungseinrichtung gespeichert wurde. Es versteht sich, dass dieser Referenzwert bei der Auswertung der in dem früheren Löse- und Spannzyklus erfassten Daten als korrekt bewertet worden sein muss, wozu zumindest beim ersten nach der Inbetriebnahme der Werkzeugspannvorrichtung überwachten Löse- und Spannzyklus ein fest vorbestimmter Referenzwert verwendet werden musste. Grundsätzlich kann aber auch stets ein fest vorbestimmter Referenzwert verwendet werden.

Eine vorteilhafte Ausgestaltung des erfindungsgemäßen Verfahrens besteht darin, dass ermittelte Werte eines charakteristischen Parameters in einem Datenspeicher einer zur Durchführung des Verfahrens vorgesehenen Überwachungseinrichtung gespeichert werden, und dass anhand der gespeicherten Werte Änderungsraten berechnet und zur Prädiktion der zukünftigen zeitlichen Entwicklung des charakteristischen Parameters verwendet werden. Beispielsweise kann die Entwicklung der Federkonstante beobachtet werden und bei Feststellung einer langsamen Abnahme mit gleichbleibender Rate vorhergesagt werden, wann die Federkonstante voraussichtlich die untere Grenze ihres zulässigen Toleranzbereiches erreichen wird. Die Erfindung ermöglicht also eine Prädiktion, wann ein charakteristischer Zustandsparameter der Werkzeugspannvorrichtung seinen zulässigen Toleranzbereich verlassen wird, und somit die rechtzeitige Planung und Vorbereitung eines notwendigen Austauschs der Werkzeugspannvorrichtung. Diese Auswertungsmethode kann selbstverständlich auch auf andere Parameter als die Federkonstante angewendet werden.

Vorzugsweise wird die Federkraft indirekt gemessen, indem eine dieser entgegenwirkende hydraulische Kraft auf einen Kolben einer hydraulischen Löseeinrichtung, welcher beim Lösen auf das Betätigungselement eine Kraft in Richtung der Lösestellung ausübt, aus der Messung eines Drucks eines Hydraulikfluids und der von diesem Druck beaufschlagten Fläche des Kolbens berechnet wird. Hierdurch wird die Notwendigkeit vermieden, zur Kraftmessung an einem Element, auf welches die Federkraft einwirkt, einen Dehnungssensor anzubringen, da die hierfür in Frage kommenden Elemente beweglich sind und insbesondere das die Spann- und Lösebewegung bewirkende Betätigungselement in Gestalt einer Zugstange im Betrieb der Arbeitsspindel mit dieser rotiert. Die Übertragung eines Sensorsignals aus der Werkzeugspannvorrichtung heraus zu der das erfindungsgemäße Verfahren ausführenden Überwachungseinrichtung wird hierdurch deutlich vereinfacht.

Bevorzugt wird auf jeder axialen Seite des Kolbens ein jeweils auf den Kolben wirkender Druck des Hydraulikfluids gemessen, aus diesem Druck und der von ihm beaufschlagten Fläche der jeweiligen Seite des Kolbens eine von dieser Seite auf den Kolben wirkende Kraft berechnet und durch Bildung der Differenz dieser beiden Kräfte die resultierende hydraulische Kraft auf den Kolben, welche der Federkraft entgegenwirkt, berechnet. Durch diese Differenzbildung kann die tatsächlich auf den Kolben wirkende hydraulische Kraft mit hoher Genauigkeit ermittelt werden.

Nachfolgend wird ein Ausführungsbeispiel der Erfindung unter Bezugnahme auf die Zeichnungen beschrieben. In diesen zeigt
- Fig. 1: eine Längsschnittansicht einer Werkzeugspannvorrichtung in zwei verschiedenen Arbeitsstellungen,
- Fig. 2: eine vereinfachte Darstellung des erfindungsgemäßen Verfahrens in Form eines Programmablaufplans,
- Fig. 3: einen beispielhaften Verlauf der Federkennlinie einer Werkzeugspannvorrichtung bei einem vollständigen Löse- und Spannzyklus,
- Fig. 4: einen anderen beispielhaften Verlauf der Federkennlinie einer Werkzeugspannvorrichtung bei einem vollständigen Löse- und Spannzyklus,
- Fig. 5: einen beispielhaften Verlauf der Federkennlinie einer Werkzeugspannvorrichtung bei einem Lösevorgang,

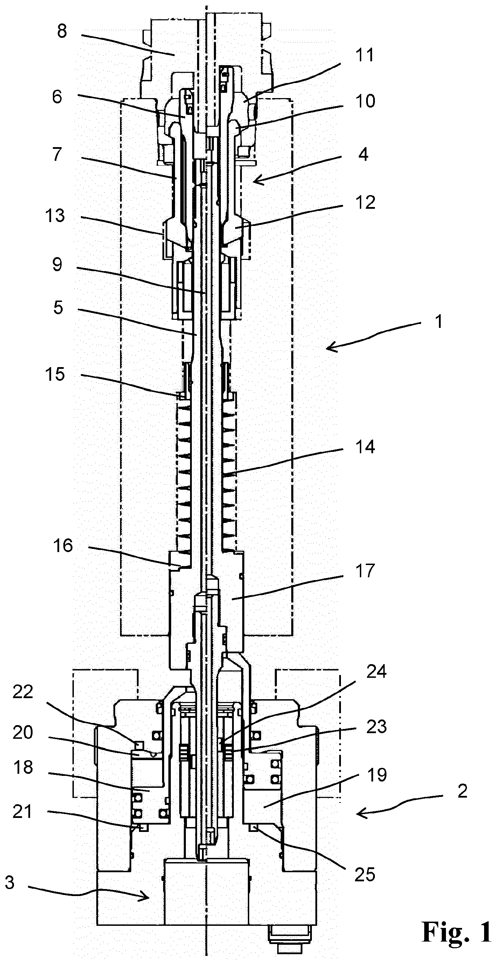

In Fig. 1 ist eine für den Einbau in eine drehbare Arbeitsspindel einer Werkzeugmaschine konzipierte Werkzeugspannvorrichtung 1 mit einer Löseeinrichtung 2 und einer Drehdurchführung 3 für die Zuführung eines Kühlschmiermittels oder eines anderen Arbeitsfluids gezeigt. Die Werkzeugspannvorrichtung 1 enthält einen Spannsatz 4, der über eine axial verschiebbare Zugstange 5 betätigbar ist. Die Zugstange bildet das Betätigungselement zum Lösen oder Spannen des Spannsatzes 4. Bei der gezeigten Ausführung weist der Spannsatz 4 einen Spannkonus 6 und mehrere um den Spannkonus 6 angeordnete Zangenelemente 7 zur Halterung eines Werkzeugs oder Werkzeughalters 8 auf. Die linke Hälfte von Fig. 1 zeigt die Werkzeugspannvorrichtung 1 in der Spannstellung, in welcher der Werkzeughalters 8 an ihr gespannt ist, die rechte Hälfte in der Lösestellung, in welcher der Werkzeughalter 8 von ihr entfernt und somit gewechselt werden kann.

Der Spannkonus 6 des Spannsatzes 4 ist an dem zum Werkzeughalter 8 weisenden vorderen Ende der Zugstange 5 befestigt. Durch axiale Verschiebung des Spannkonus 6 über die Zugstange 5 sind die Zangenelemente 7 zur Klemmung bzw. Freigabe der Werkzeugaufnahme 8 radial bewegbar. Der hier in Art einer Spannzange ausgeführte Spannsatz 4 kann aber auch z.B. mit radial beweglichen Kugeln oder auf andere Weise ausgebildet sein. Die Zugstange 3 weist in der gezeigten Ausführung eine Durchgangsbohrung 9 für die Zuführung eines über die Drehdurchführung 3 eingeleiteten Arbeits- und/oder Reinigungsfluids zum Werkzeughalter 8 auf.

Die Zangenelemente 7 des Spannsatzes 4 greifen mit ihren äußeren Enden 10 in eine Ringnut 11 der Werkzeugaufnahme 8 ein. Mit ihren inneren Enden 12 sind die Zangenelemente 7 in einem hülsenförmigen Abstandshalter 13 geführt. Die Zugstange 5 wird durch eine um diese konzentrisch angeordnete Federanordnung 14 in eine zurückgezogene Spannstellung vorgespannt. Die bei der gezeigten Ausführung als Tellerfederpaket ausgebildete Federanordnung 14 ist an der einen Seite an einem innerhalb der Arbeitsspindel abgestützten buchsenförmigen Anlageelement 15 und an der anderen Seite an einer Ringfläche 16 eines verbreiterten hinteren Teils 17 der Zugstange 5 abgestützt.

An dem von dem Werkzeughalter 8 abgewandten hinteren Ende der Zugstange 5 ist die Löseeinrichtung 2 angeordnet. Diese enthält einen innerhalb eines Gehäuses verschiebbar geführten und über ein Druckfluid bewegbaren Kolben 18, über den die Zugstange 5 entgegen der Kraft der Federanordnung 14 in eine Lösestellung gedrückt werden kann. Wenn die Zugstange 5 bei der in der rechten Hälfte von Fig. 1 gezeigten Lösestellung über den Kolben 18 der Löseeinrichtung 2 durch entsprechende Zuführung eines Hydraulikfluids zur Löseeinrichtung 2 entgegen der Kraft der Federanordnung 14 in Richtung des Werkzeughalters 8 geschoben wird, werden die Zangenelemente 7 radial nach innen verschoben und geben den Werkzeughalter 8 zur Entnahme aus der Arbeitsspindel frei. Wird dagegen der Kolben 18 durch entsprechende Ansteuerung der Löseeinrichtung 2 eingezogen, wird auch die Zugstange 5 durch die Kraft der Federanordnung 14 wieder eingezogen, wodurch die Zangenelemente 7 über den Spannkonus 6 radial nach außen gedrückt werden und den Werkzeughalter 8 in die Arbeitsspindel einziehen und spannen. Diese Stellung ist in der linken Hälfte von Fig. 1 zu sehen. Über die Drehdurchführung 3 kann Kühlschmiermittel oder ein anderes Arbeitsfluid in die während der Bearbeitung rotierende Zugstange 5 geleitet und über die Durchgangsbohrung 9 zu dem Werkzeughalter 8 geführt werden.

Durch den Kolben 18 wird ein mit einem Hydraulikfluid gefüllter Hohlraum im Inneren der Löseeinrichtung 2 in eine hintere Kammer 19 und eine vordere Kammer 20 geteilt. Beim Lösevorgang wird die hintere Kammer 19 durch ein mit der Löseeinrichtung 2 über Hydraulikleitungen verbundenes externes Hydraulikaggregat, das in Fig. 1 nicht gezeigt ist, mit Druck beaufschlagt, während die vordere Kammer 20 drucklos gestellt wird. Der Kolben 18 bewegt sich dadurch nach vorne, wobei er das Hydraulikfluid aus der vorderen Kammer 20 verdrängt. Nachdem sein vorderes Ende hierbei auf die Stirnfläche des hinteren Teils 17 der Zugstange 5 getroffen ist, bewegt er diese unter Kompression der Federanordnung 14 nach vorne bis zur Freigabe des Werkzeughalters 8 durch die Spannzangen 7.

Beim Spannvorgang wird die vordere Kammer 20 durch das Hydraulikaggregat mit Druck beaufschlagt, während die hintere Kammer 19 drucklos gestellt wird. Der Kolben 18 bewegt sich durch die Kombination aus der hydraulischen Kraft und der Kraft der Federanordnung 14 angetrieben nach hinten, wobei er das Hydraulikfluid aus der hinteren Kammer 19 verdrängt. Hierbei wird der Druck in der vorderen Kammer 20 so gesteuert, dass die hydraulische Kraft deutlich geringer ist als die Kraft der Federanordnung 14, damit die Bewegung überwiegend durch letztere angetrieben wird. Wenn sich der Kolben 18 von der Stirnfläche des hinteren Teils 17 der Zugstange 5 gelöst hat, liefert die Federanordnung 14 keinen Beitrag mehr zur Bewegung des Kolbens 18, sondern diese wird ab dann nur noch durch den Druck des Hydraulikfluids in der vorderen Kammer 20 bewirkt. Dieser Teil des Bewegungsablaufs des Spannvorgangs dient der Herstellung eines axialen Abstandes zwischen den beim Lösevorgang miteinander in Kontakt gelangenden Oberflächen der Zugstange 5 und des Kolbens 18, da die Zugstange 5 während der Werkstückbearbeitung rotiert, während der Kolben 18 stillsteht.

Erfindungsgemäß ist an der hinteren Kammer 19 des Hohlraumes ein erster Drucksensor 21 zur Erfassung des Drucks des Hydraulikfluids in der hinteren Kammer 19 angeordnet und an der vorderen Kammer 20 des Hohlraumes ist ein zweiter Drucksensor 22 zur Erfassung des Drucks des Hydraulikfluids in der vorderen Kammer 20 angeordnet. Aus diesen Drücken und den bekannten Flächen des Kolbens 18, welche mit diesen Drücken beaufschlagt werden, kann die resultierende hydraulische Kraft auf den Kolben 18 berechnet werden. Hierbei ist zu beachten, dass die Flächen des Kolbens 18, welche die beiden Kammern 19 und 20 axial nach vorne bzw. nach hinten begrenzen, nicht gleich sind, wie aus Fig. 1 ersichtlich ist. Die Drucksensoren 21 und 22 können beispielsweise piezoresistive oder kapazitive Drucksensoren an sich bekannter Art sein.

Obgleich sowohl beim Lösen, als auch beim Spannen stets nur eine der beiden Kammern 19 oder 20 extern mit Druck beaufschlagt wird, während die jeweils andere drucklos gestellt wird, entsteht durch die Verdrängung des Hydraulikfluids aus der jeweils drucklosen Kammer infolge der Bewegung des Kolbens 18 in dieser Kammer ein Staudruck, welcher eine gegen die jeweilige Bewegungsrichtung des Kolbens 18 gerichtete Kraft auf den Kolben 18 zur Folge hat. Die resultierende Kraft auf den Kolben 18, die in dessen Bewegungsrichtung wirkt, wird hierdurch etwas verringert.

Ferner ist erfindungsgemäß im Inneren der Löseeinrichtung 2 ein Positionssensor 23 zur Erfassung der axialen Position der Zugstange 5 angeordnet. Bei diesem Sensor handelt sich zweckmäßigerweise um einen berührungslosen Sensor. Beispiele geeigneter Sensoren sind induktive Sensoren in Form eines Differentialtransformators (LVDT) oder einer Differentialdrossel, deren Wicklungen jeweils die Zugstange 5 umgeben. Diese weist im axialen Bereich des Positionssensors 23 eine Variation des Querschnitts und/oder der magnetischen Permeabilität auf. Beispielsweise kann dort ein Ring 24 an der Zugstange 5 befestigt sein, der aus einem Material hoher magnetischer Permeabilität bestehen kann. Die axiale Position eines solchen Abschnitts abweichenden Querschnitts und/oder abweichender Permeabilität kann mittels eines Differentialtransformators (LVDT) oder einer Differentialdrossel in an sich bekannter Weise gemessen werden.

Eine andere mögliche Ausführungsform eines berührungslosen Positionssensors 23 ist ein radialer induktiver Abstandssensor in Verbindung mit einem auf der Zugstange 5 befestigten Ring aus ferromagnetischem Material, dessen Außenseite in axialer Richtung abgeschrägt ist. Aus der gemessenen Änderung des radialen Abstandes zwischen diesem Ring und dem Abstandssensor bei einer axialen Verschiebung der Zugstange 5 kann die axiale Position letzterer ermittelt werden. Geeignete induktive Abstandssensoren sind an sich bekannt.

Eine weitere mögliche Ausführungsform eines berührungslosen Positionssensors 23 ist ein kapazitiver Sensor, bei dem ein Abschnitt abweichenden Querschnitts der Zugstange 5 eine gemeinsame Elektrode zweier zueinander in Reihe geschalteter Kondensatoren bildet. Bei einer solchen Anordnung hängt die Gesamtkapazität von der axialen Position besagten Abschnitts der Zugstange 5 relativ zu zwei axial aufeinanderfolgenden äußeren Elektroden, welche die Zugstange 5 umgeben, ab. Auch kapazitive Positionssensoren solcher Bauart sind an sich bekannt und bedürfen daher hier keiner detaillierten Erläuterung.

Des weiteren ist an der Rückwand der hinteren Kammer 19 ein Kolbenpositionssensor 25 angeordnet, dessen Aufgabe die Detektion der hinteren Endposition des Kolbens 18 ist. Durch die Abfrage des Signals des Kolbenpositionssensors 25, bei dem es sich beispielsweise um einen induktiven, kapazitiven oder magnetischen Näherungsschalter handeln kann, wird im Betriebsablauf sichergestellt, dass zwischen dem Kolben 18 und der Stirnfläche des hinteren Teils 17 der Zugstange 5 kein Kontakt mehr besteht, bevor die Arbeitsspindel und mit dieser auch die Zugstange 5 in Rotation versetzt wird.

Die vorausgehend beschriebenen Druck- und Positionssensoren 21 bis 23 und ggf. 25 dienen der Durchführung des erfindungsgemäßen Verfahrens durch eine elektronische Überwachungseinrichtung. Die Hardware dieser Überwachungseinrichtung umfasst eine Signalverarbeitungselektronik zur Aufbereitung und Analog-Digital-Wandlung der Sensorsignale, einen Mikrocomputer zur programmgesteuerten Auswertung der Sensorsignale und einen nichtflüchtigen Datenspeicher zur Aufzeichnung von Mess- und Auswertungsergebnissen. Der Mikrocomputer ist über eine geeignete Schnittstelle mit der Maschinensteuerung der Bearbeitungsmaschine, in deren Arbeitsspindel die zu überwachende Werkzeugspannvorrichtung 1 eingebaut ist, verbunden und kann auch mit einer Anzeigeeinrichtung zur Ausgabe von Informationen an das Bedienpersonal der Bearbeitungsmaschine ausgerüstet sein. Die Hardware der Überwaschungseinrichtung besteht somit aus Standardkomponenten der Analog- und Digitalelektronik und bedarf daher an dieser Stelle keiner detaillierten Erläuterung.

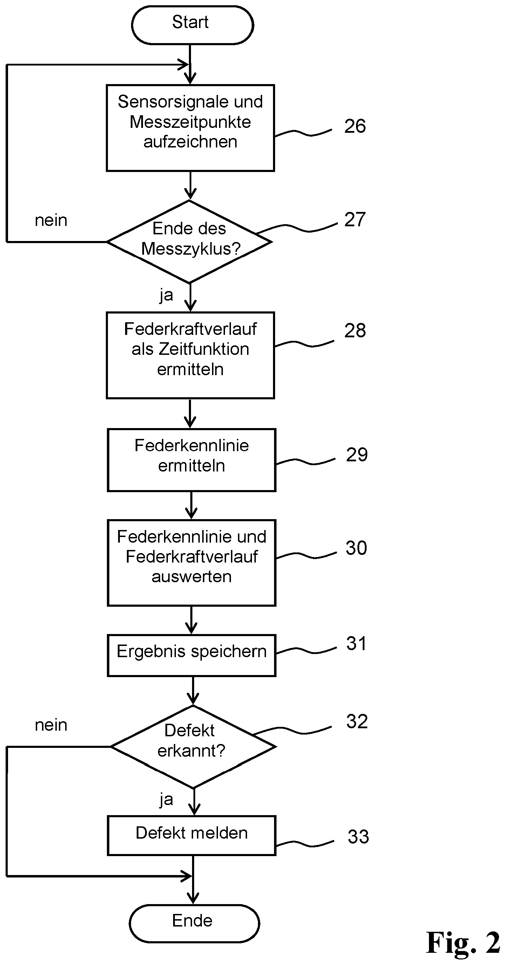

Fig. 2 zeigt den grundlegenden Ablauf des erfindungsgemäßen Verfahrens in Form eines Programmablaufplans. Den Start eines Zyklus des Verfahrens bildet der Start eines Lösevorgangs. Dieser kann der Überwachungseinrichtung entweder von der Steuereinrichtung, welche den Betrieb der Arbeitsspindel steuert, direkt signalisiert werden, oder er kann durch ein Sensorsignal ausgelöst werden, beispielsweise durch einen Anstieg des durch den Drucksensor 21 gemessenen Druckes in der hinteren Kammer 19, durch den eine Bewegung des Kolbens 18 eingeleitet wird. Es könnte sich aber auch um das Signal des Kolbenpositionssensors 25 handeln, welcher die hintere Endposition des Kolbens 18 überwacht. Wenn nämlich der Kolben 18 seine hintere Endposition verlässt, dann ist dies ein klares Indiz für den Beginn eines Lösevorgangs.

Nach dem Start werden in Schritt 26 die Sensorsignale der Drucksensoren 21 und 22 sowie des Positionssensors 23 und die Zeitpunkte ihrer Erfassung aufgezeichnet. Letzteres wird dadurch ermöglicht, dass die Überwachungseinrichtung, welche das erfindungsgemäße Verfahren durchführt, unter anderem auch eine Echtzeituhr enthält. Der Zweck des Schrittes 26 ist es, die Signale besagter Sensoren 21 bis 23 als Funktionen der Zeit zu speichern. Dies kann dadurch geschehen, dass die Sensorsignale nach dem Start zeitgesteuert in festen zeitlichen Abständen erfasst werden und zu jedem erfassten Messwert eines Sensorsignals auch die Zeit gespeichert wird, zu der er erfasst wurde. Diese Aufzeichnung von Messwerten der Sensorsignale erfolgt periodisch fortlaufend solange, bis im Schritt 27 festgestellt wird, dass das Ende eines Messzyklus erreicht wurde.

Das Ende eines Messzyklus ist normalerweise das Ende eines kompletten Löse- und Spannzyklus der Werkzeugspannvorrichtung 1. Es kann daran erkannt werden, dass der Positionssensor 23 anzeigt, dass die Zugstange 5 wieder ihre hintere Endposition erreicht hat, in welcher der Werkzeughalter 8 durch die Spannzangen 7 gespannt ist. Grundsätzlich könnte das Ende eines Messzyklus aber bei einer vereinfachten Form des Verfahrens auch bereits als das Ende eines Lösevorgangs definiert werden, welches daran erkannt werden kann, dass die Zugstange 5 ihre vordere Endposition erreicht hat, in welcher der Werkzeughalter 8 durch die Spannzangen 7 freigegeben ist.

Alternativ zur Aufzeichnung aller einzelnen Zeitpunkte der Erfassung von Sensorsignalen könnte auch die Zeit nach dem Start eines Messzyklus erfasst werden und es könnten anschließend die Sensorsignale fortlaufend und zwischen den Sensoren zyklisch abwechselnd erfasst werden, bis das Ende eines Messzyklus erreicht wird. In diesem Fall müsste nur am Ende eines Messzyklus wieder die Zeit erfasst werden und es könnte anhand der Differenz der beiden erfassten Zeiten und der Anzahl der Messwerte der Sensorsignale für jeden einzelnen Messwert eine Zeit, zu welcher er erfasst wurde, rechnerisch ermittelt und dem Messwert zugeordnet und gespeichert werden, sofern gewährleistet ist, dass die fortlaufende Erfassung der Sensorsignale nach einem regelmäßigen zeitlichen Schema, insbesondere mit konstanten Zeitintervallen zwischen den Erfassungen der einzelnen Messwerte erfolgt.

Wesentlich für das erfindungsgemäße Verfahren ist, dass die von den Sensoren 21 bis 23 erfassten Messwerte nach dem Ende eines Messzyklus, d.h. bevor das Verfahren mit Schritt 28 fortgesetzt wird, als Funktionen der Zeit gespeichert sind, d.h. dass von jedem Sensorsignal eine Reihe von Messwerten gespeichert ist, von denen jedem eine Zeit zugeordnet ist, zu welcher er erfasst wurde. Diese Zeit braucht keine absolute Zeit zu sein, sondern es kann sich auch um eine Zeitdifferenz bezogen auf eine Startzeit, zu welcher der Messzyklus begonnen hat, handeln.

In Schritt 28 wird sodann aus den Messwerten der Signale der Drucksensoren 21 und 22 und den bekannten Flächen der Vorder- und Rückseite des Kolbens 18 die resultierende hydraulische Kraft auf den Kolben 18 als Funktion der Zeit berechnet, deren zugehörige Reaktionskraft beim Kontakt des Kolbens 18 mit der Zugstange 5 die Kraft der Federanordnung 14 ist. Aus diesem Federkraftverlauf als Funktion der Zeit und der gespeicherten Position der Zugstange 5 als Funktion der Zeit wird anschließend in Schritt 29 die Federkennlinie der Federanordnung 14 in Form der resultierenden hydraulischen Kraft auf den Kolben 18 als Funktion des Weges der Zugstange 5 ermittelt. Dieser Vorgehensweise liegt die Annahme zugrunde, dass die Reibungskräfte, die in dem Bewegungsablauf eines Löse- und Spannzyklus in dem gesamten System unvermeidlich auftreten, gegenüber der Federkraft der Federanordnung 14 und der resultierenden hydraulischen Kraft des Kolbens 18 vernachlässigbar sind.

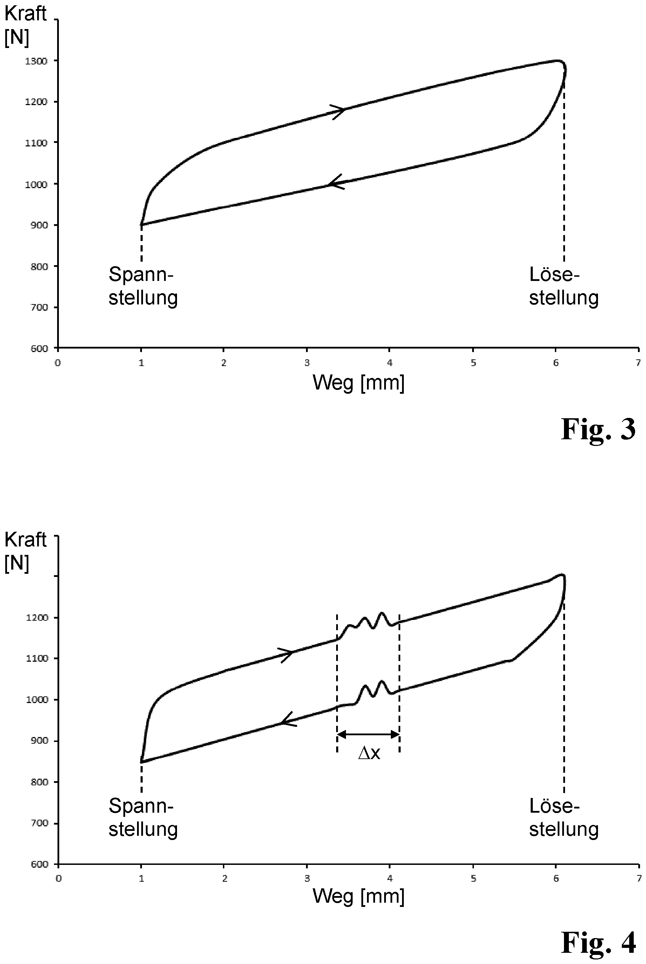

Im anschließenden Schritt 30 werden aus der Federkennlinie dann eine Reihe charakteristischer Parameter ermittelt, welche Aufschluss über den aktuellen Zustand der Werkzeugspannvorrichtung 1 geben, was im Weiteren noch anhand der Figuren 3 bis 5 erläutert wird. Diese ermittelten Parameter werden dann in Schritt 31 gespeichert, um ihre zeitliche Entwicklung zu protokollieren.

In Schritt 32 werden die ermittelten Parameter dann daraufhin geprüft, ob sie auf einen bereits vorhandenen oder sich anbahnenden Defekt an der Werkzeugspannvorrichtung 1 hindeuten. Wenn dies der Fall ist, wird in Schritt 33 eine entsprechende Meldung ab- bzw. ausgegeben. Hierbei kann es sich um eine Meldung an die Maschinensteuerung der Bearbeitungsmaschine, in deren Arbeitsspindel die Werkzeugspannvorrichtung 1 eingebaut ist handeln. Es kann aber auch alternativ oder zusätzlich an einer Anzeigeeinrichtung ein optisches und/oder akustisches Warnsignal für das Bedienpersonal der Maschine ausgegeben werden. Nach dem Schritt 32 oder 33 ist ein Zyklus des erfindungsgemäßen Verfahrens beendet.

Fig. 3 zeigt die gemessene Kraft als Funktion des Weges einer typischen Federkennlinie der Art, wie sie in Schritt 29 ermittelt wird. Es ist anzumerken, dass die in Fig. 3 gezeigte Federkennlinie an einem Prüfstand aufgezeichnet wurde, wozu die Federanordnung 14 auf einer Zugstange 5 ausgehend von einer definierten Ausgangslage aus um einen gewissen Weg gestaucht und wieder bis zur Ausgangslage entlastet wurde. Dies ist der Grund dafür, dass der Weg und die Kraft in Fig. 3 nicht bei Null beginnen, wobei anzumerken ist, dass die Federanordnung 14 auch im eingebauten Zustand stets eine bestimmte Vorspannung hat. Qualitativ hätte daher eine bei dem erfindungsgemäßen Verfahren anhand einer in eine Arbeitsspindel eingebauten Werkzeugspannvorrichtung ermittelte Federkennlinie in demjenigen Bereich des Weges, in dem die Federanordnung 14 komprimiert wird, die gleiche Form wie in Fig. 3. Sie wäre in einer Fig. 3 entsprechenden Darstellung lediglich möglicherweise in horizontaler und vertikaler Richtung verschoben.

Ein erster Parameter, der zur Überprüfung der korrekten Funktion der Werkzeugspannvorrichtung 1 im Betrieb herangezogen werden kann, ist der Wert der bei einem bestimmten vorgegebenen Weg gemessenen Kraft. Eine zu große Abweichung von einem erwarteten Sollwert ist bereits ein Indiz für eine fehlerhafte Funktion der Federanordnung 14 der Werkzeugspannvorrichtung 1. Diese Überprüfung erfordert keinen großen Rechenaufwand und kann daher sehr schnell durchgeführt werden. Falls sie negativ ausfällt, sollte die Werkzeugspannvorrichtung 1 nicht betrieben werden, da keine korrekte Werkstückbearbeitung zu erwarten ist.

Wie in Fig. 3 erkennbar ist, verläuft der obere Ast der Federkennlinie, welcher beim Lösevorgang aufwärts in Richtung des dort eingetragenen Pfeils durchlaufen wird, nach einem nichtlinearen Anstieg zu Beginn der Bewegung weitestgehend linear. Für besagten linearen Bereich der Federkennlinie, der eine vorab bekannte Erstreckung hat, kann in einfacher Weise rechnerisch die Steigung des zugehörigen Kennlinienastes ermittelt werden, welche eine erste Federkonstante der Federanordnung 14 darstellt. Diese erste Federkonstante bildet einen weiteren Parameter zur Beurteilung des Zustandes der Werkzeugspannvorrichtung 1 in Schritt 30. Sie muss in einem vorgegebenen Toleranzbereich um einen vorgegebenen Sollwert liegen, wenn die Werkzeugspannvorrichtung 1 intakt ist. Eine zu große Abweichung vom Sollwert bedeutet einen fehlerhaften Zustand der Federanordnung 14. Insbesondere ist ein zu geringer Wert der Federkonstante ein Anzeichen für Materialermüdung oder Verformung der Federanordnung 14 nach einer großen Anzahl von Lastwechseln.

Alternativ zur Berechnung der Steigung könnte auch ein Korrelationsfaktor berechnet werden, der ein Maß für die Ähnlichkeit der Kennlinie mit einer vorgegebenen Referenzkennlinie darstellt. Diese Art der Auswertung kann nicht nur auf eine lineare Federkennlinie angewendet werden, sondern auch auf eine Federanordnung 14 mit einem konstruktionsbedingt nichtlinearen Verlauf der Federkennlinie innerhalb des interessierenden Bereiches. Korrelationsverfahren zur Ähnlichkeitsbetrachtung zweier Funktionen sind als solche bekannt.

Wie aus Fig. 3 ersichtlich ist, verläuft auch der untere Ast der Federkennlinie, welcher beim Spannvorgang abwärts in Richtung des dort eingetragenen Pfeils durchlaufen wird, nach einem nichtlinearen Abfall der Kraft zu Beginn des Spannvorgangs weitestgehend linear. Für besagten linearen Bereich kann ebenfalls in einfacher Weise rechnerisch die Steigung des zugehörigen Kennlinienastes ermittelt werden, welche eine zweite Federkonstante der Federanordnung 14 darstellt. Die beiden Federkonstanten sind normalerweise nicht gleich, wie eine genaue Betrachtung von Fig. 3 erweist. Auch die zweite Federkonstante stellt einen Zustandsparameter der Werkzeugspannvorrichtung 1 dar und wird nach analogen Kriterien bewertet wie die erste Federkennlinie.

Die von der gesamten Federkennline von Fig. 3 eingeschlossene Fläche stellt die bei einem kompletten Löse- und Spannzyklus zur Überwindung von Reibungskräften aufzuwendende Verlustenergie dar. Diese ist ein weiterer Parameter, welcher den Zustand der Werkzeugspannvorrichtung 1 kennzeichnet. Konstruktiv wird während der Auslegung des Spannsystems versucht, die Verlustenergie möglichst gering zu halten. Bei einer intakten Werkzeugspannvorrichtung 1 darf diese Verlustenergie daher einen vorgegebenen Grenzwert nicht überschreiten. Eine zu große Verlustenergie deutet auf übermäßig hohe Reibung infolge von Materialverschleiß an einer oder mehreren Stellen innerhalb der Werkzeugspannvorrichtung 1 hin.

Zur Bewertung der Verlustenergie kann als weiterer Parameter auch der Quotient aus der Verlustenergie und der Lösearbeit berechnet werden, wobei die Lösearbeit die Fläche zwischen dem oberen Ast der Kennlinie von Fig. 3 und der Abszisse ist. Besagter Quotient gibt an, welcher Teil der insgesamt aufgewendeten Arbeit in Verlustenergie, also Wärme umgesetzt wird. Dieser Wert sollte sich durch Einbau und Betrieb der Werkzeugspannvorrichtung 1 nur minimal ändern. Wird eine höhere Abweichung festgestellt ist von einer reduzierten Spannsystemlebensdauer auszugehen. Es ist anzumerken, dass die Verlustenergie auch mit einer erhöhten Geschwindigkeit der Federbewegung zunimmt. Somit lassen sich Überlastsituationen erkennen, welche die Lebensdauer der Werkzeugspannvorrichtung 1 ebenfalls verkürzen.

Einen weiteren Zustandsparameter der Werkzeugspannvorrichtung 1 bildet die Abweichung der Kurvenform der Federkennlinie von der in Fig. 3 gezeigten Form, die sich durch eine weitgehende Linearität beider Äste innerhalb eines vorbestimmten Bereiches des Weges auszeichnet. Ein Beispiel für eine Kennlinie, die markante Abweichungen von einer solchen überwiegend linearen Form aufweist, zeigt Fig. 4. Innerhalb des in Fig. 4 mit Δx gekennzeichneten Bereiches des Weges weisen beide Äste der dortigen Federkennlinie signifikante Erhöhungen der Kraft innerhalb kurzer Wegstücke auf. Diese deuten darauf hin, dass die Kompression bzw. Expansion der Federanordnung 14 nicht gleichmäßig verläuft, was eine Verkürzung der Lebensdauer des Spannsystems zur Folge haben kann. Die Ursache kann darin liegen, dass die einzelnen Tellerfederelemente, aus denen sich die Federanordnung 14 zusammensetzt, auf der Zugstange 5 unterschiedlich stark belastet werden, was durch Klemmen einzelner Elemente geschehen kann. Auch Abstützbuchsen, welche für bessere Wuchtergebnisse beispielsweise in der Mitte der Federanordnung angebracht werden, können sich in die Zugstange 5 einarbeiten, was zu einseitiger Kraftbelastung der Federanordnung 14 führt.

Kommt es zu Reibvorgängen zwischen Federelementen und der Zugstange 5, dann macht sich dies ebenfalls in Form von Schwingungen der Federkennlinie bemerkbar. Diese sind sowohl während des Löse- als auch des Spannvorgangs sichtbar. Eine geeignete Maßzahl zur Bewertung von Linearitätsabweichungen ist die Standardabweichung der Messwerte von dem durch eine errechnete Federkonstante gegebenen linearen Verlauf. Sie sollte einen bestimmten Grenzwert nicht überschreiten, wenn die Federanordnung intakt ist. Um dies zu gewährleisten, wird mittels Öl, Fett oder geeigneten Beschichtungen für eine gutes Gleitverhalten der Federelemente auf der Zugstange 5 gesorgt. Aufgrund von Flüssigkeitseintritt oder Einarbeitung einzelner Federelemente kann eine verminderte Gleitfähigkeit vorliegen, was auf einen Verschleiß an der Federführung hindeutet. Durch die beschriebene Auswertung lässt sich die Gleitfähigkeit der Federelemente auf der Zugstange 5 und damit der tribologische Zustand des Systems aus Federelementen, Führung und Schmierung überprüfen.

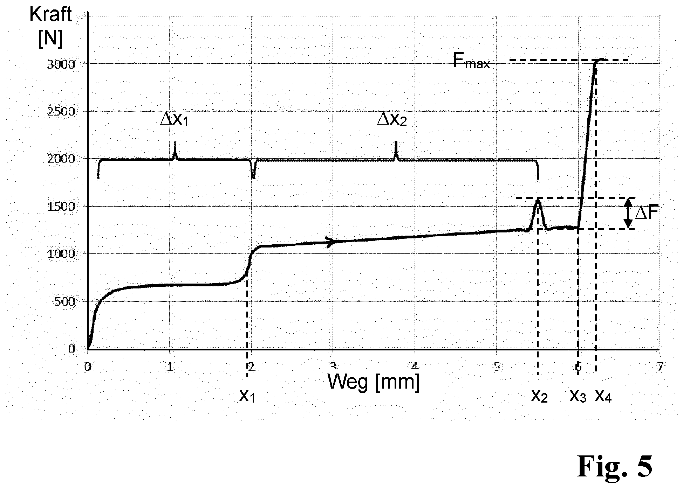

Ein Beispiel für den beim Lösevorgang durchlaufenen Ast der Federkennlinie einer Werkzeugspannvorrichtung 1 im fertig in eine Arbeitsspindel eingebauten Zustand zeigt Fig. 5. Hierbei entspricht der Abschnitt zwischen den Wegpunkten x₁ und x₃ etwa dem oberen Ast der Kennlinie von Fig. 3, in welchem allerdings wegen der Messung an einem Prüfstand das Maximum beim Wegpunkt x₂ nicht auftritt. Der in Fig. 5 mit als Δx₁ gekennzeichnete Anfangsabschnitt der Federkennlinie von Fig. 5 links des Wegpunktes x₁ stellt den Wegbereich dar, in dem sich der Kolben 18 infolge des Drucks in der hinteren Kammer 19 nach vorne bewegt, ohne dass sein vorderes Ende Kontakt mit der hinteren Stirnfläche des hinteren Teils 17 der Zugstange 5 hat. Bei zunehmendem Weg bleibt die Kraft hier noch nahezu konstant, da die Federanordnung 14 noch nicht komprimiert wird.

An dem Wegpunkt x₁ gelangt das vordere Ende des Kolbens 18 mit der hinteren Stirnfläche des hinteren Teils 17 der Zugstange 5 in Kontakt und es beginnt ab hier die Kompression der Federanordnung 14, weshalb die Kraft nun mit zunehmendem Weg annähernd linear ansteigt. Bei dem Wegpunkt x₂ steigt die Kraft steil um eine Kraft ΔF auf ein relatives Maximum an und fällt dann ebenso steil wieder ab. Anschließend setzt sich der vorherige, annähernd lineare Kraftverlauf wieder für ein kurzes Wegstück fort, bevor ab dem Wegpunkt x₃ ein steiler Anstieg der Kraft auf einen wesentlich höheren Wert Fₘₐₓ am Wegpunkt x₄ erfolgt, der das Ende des Lösevorgangs anzeigt.

Das relative Maximum der Kraft bei dem Wegpunkt x₂ wird durch das Ausstoßen eines gespannten Werkzeugs oder Werkzeughalters verursacht. Während eines Spannvorgangs wird nämlich der Konus des Werkzeughalters 4 durch die Federkraft in die Werkzeugaufnahme gezogen (Kegelpressverband). Aufgrund der Höhe der Einzugskraft verformt sich diese geringfügig und der Werkzeughalter 4 würde auch ohne die Kraft der Federanordnung 14 in der Aufnahme klemmen. Folglich ist es notwendig, dass für einen Lösevorgang diese zusätzliche Kraft überwunden werden muss, was sich in der Federkennlinie in dem vorübergehenden Anstieg ΔF der Kraft im Bereich des Wegpunktes x₂ äußert. Findet kein Werkzeugausstoß statt, kann dies z.B. an einem fehlerhaften Werkzeughalter 4 liegen, welcher nicht in Kontakt mit dem Spannkegel kommt. Es fehlt dann das relative Maximum der Federkennlinie am Wegpunkt x₂. Sollte das Werkzeug nicht ausgestoßen werden können, weil die aufgebrachte Lösekraft nicht ausreichend hoch ist, dann findet nur ein abschließender steiler Anstieg der Federkraft bis zum Wegpunkt x₄ statt, jedoch fehlt auch in diesem Fall das relative Maximum der Federkennlinie am Wegpunkt x₂.

Zur Erkennung des korrekten Werkzeugausstoßes kann bei der Auswertung der Federkennlinie von Fig. 5 in einem vorgegebenen Wegbereich um den Wegpunkt x₂ herum, in dem der Werkzeugausstoß zu erwarten ist, nach einem relativen Maximum der Federkennlinie gesucht werden, dessen Höhe ΔF in einem vorgegebenen Bereich d.h. zwischen einem Mindestwert und einem Maximalwert liegt. Zur sicheren Erkennung kann beispielsweise auch die Breite des Bereiches der vorübergehenden Krafterhöhung anhand der Berechnung der Wendepunkte der Kurve links und rechts eines relativen Maximums als zusätzliches Kriterium herangezogen und mit einer erwarteten Breite verglichen werden.

Das Vorhandensein eines relativen Maximums, welches einen korrekten Werkzeugausstoß anzeigt, ist ein weiterer charakteristischer Parameter, welcher den Zustand des Werkzeugspannvorrichtung 1 kennzeichnet und aus der Federkennlinie ermittelbar ist. Es versteht sich, dass eine Fehlermeldung hoher Priorität an die Maschinensteuerung der Bearbeitungsmaschine gesendet werden sollte, wenn ein erwarteter Werkzeugausstoß nicht erkannt wurde, damit der Betrieb unterbrochen und der in diesem Fall bestehende Defekt behoben werden kann, um eine fehlerhafte Werkstückbearbeitung zu vermeiden.

Nach einem korrekten Ausstoß des Werkzeugs wird die Zugstange 5 durch den Kolben 18 noch weiterbewegt, bis diese an einen mechanischen Anschlag gelangt, der in Fig. 5 an einen einem sehr steilen Anstieg der Kraft zwischen den Wegpunkten x₃ und x₄ erkennbar ist. Am Ende der Bewegung, d.h. am Wegpunkt x₄ in Fig. 5, wird die maximale Kraft Fₘₐₓ, welche durch das Hydraulikaggregat und den Kolben 18 aufgebracht werden kann, ersichtlich. Durch die Erfassung dieser maximalen Werkzeuglösekraft Fₘₐₓ, die einen weiteren für den Zustand der Werkzeugspanvorrichtung 1 charakteristischen Parameter darstellt, lässt sich der durch das Hydraulikaggregat erzeugte Druck beispielsweise unter dem Aspekt der Energieeffizienz anpassen.

Aufgrund der erfolgten Aufzeichnung der Zeiten zu jedem Wert des Weges und der Kraft, können aus den Zeitfunktionen dieser beiden Größen auch zeitliche Parameter eines Löse- und Spannzyklus der Werkzeugspannvorrichtung 1 ermittelt werden. Solche sind insofern bedeutsam, als die Werkzeuglösezeit ein entscheidendes Leistungsmerkmal einer Werkzeugspannvorrichtung 1 ist. In erster Linie sind hierbei folgende Zeitintervalle relevant:
- Die Zeit zwischen dem Empfang des Signals zum Lösen von der Maschinensteuerung und dem Beginn der Kraftbeaufschlagung des Kolbens 18 in Richtung der Lösestellung. Das Ende dieses Zeitintervalls kann anhand des Signals des Drucksensors 21 an der hinteren Kammer 19 detektiert werden.
- Die Zeit zwischen dem Beginn der Kraftbeaufschlagung des Kolbens 18 in Richtung der Lösestellung und dem Kontakt des vorderen Endes des Kolbens 18 mit dem hinteren Teil 17 des Zugstange 5. Die zu diesem Zeitintervall gehörige Wegstrecke der Zugstange ist in Fig. 5 als Δx₁ gekennzeichnet. Der Kontakt kann anhand eines sprunghaften Anstiegs der Kraft detektiert werden, die in Fig. 5 am Wegpunkt x₁ erkennbar ist.
- Die Zeit zwischen dem Kontakt des vorderen Endes des Kolbens 18 mit dem hinteren Teil 17 der Zugstange 5 und dem Auswurf des Werkzeugs. Die zu diesem Zeitintervall gehörige Wegstrecke der Zugstange ist in Fig. 5 als Δx₂ gekennzeichnet. Der Kontakt kann anhand eines vorübergehenden Anstiegs ΔF der Kraft detektiert werden, der in Fig. 5 am Wegpunkt x₂ erkennbar ist.

Die genannten charakteristischen Zeitintervalle sind weitere charakteristische Parameter des Zustandes der Werkzeugspannvorrichtung 1. Durch deren Bestimmung lassen sich technische Varianten vergleichen und optimieren. Ebenso lassen sich Druckschwankungen und Unregelmäßigkeiten im Hydrauliksystem überwachen. Während des Maschinenbetriebs kann die Varianz der Lösezeiten aufgezeichnet und für ein dynamisches Werkzeugwechselprogramm verwendet werden. Alternativ kann die längste mögliche Zeitdauer für einen Werkzeugwechsel (ungünstigster Fall) als Berechnungsgrundlage verwendet werden.

Es sei betont, dass die in dem vorgestellten Ausführungsbeispiel vorgesehene indirekte Kraftmessung über eine Druckmessung zwar zweckmäßig, aber keineswegs die einzige Möglichkeit ist. Wie bereits erwähnt, könnte beispielsweise unter Inkaufnahme eines erhöhten Aufwandes zur Signalübertragung die Federkraft auch über eine Dehnungsmessung an der Zugstange 5 gemessen werden. Ferner könnte auch die Auslenkung der Federanordnung 14 anhand der Position der Zugstange 5 auch mit anderen als den erwähnten Sensoren, beispielsweise optisch oder auf Radarbasis gemessen werden. Ferner sei darauf hingewiesen, dass die in den Figuren 3 bis 5 angegebenen Zahlenwerte der Kraft und des Weges rein beispielhaften Charakter haben.

## Patentansprüche

1. Verfahren zur Überwachung einer in eine Arbeitsspindel eingebauten Werkzeugspannvorrichtung (1), deren Spannkraft durch eine Federanordnung (14) erzeugt wird, die auf ein das Spannen oder Lösen eines Werkzeugs oder Werkzeughalters (4) bewirkendes Betätigungselement (5) eine Kraft in Richtung der Spannstellung ausübt, **dadurch gekennzeichnet, dass** beim Lösen und/oder beim Spannen eines Werkzeugs oder Werkzeughalters (4) die Federkraft und der Weg des Betätigungselementes (5) fortlaufend gemessen und jeweils als Funktionen der Zeit aufgezeichnet werden, und dass aus diesen aufgezeichneten Funktionen mindestens ein für den Zustand der Werkzeugspannvorrichtung (1) charakteristischer Parameter ermittelt wird, wobei aus der Federkraft und dem Weg als Funktionen der Zeit eine Federkennlinie in Form der Federkraft als Funktion des Weges ermittelt wird, und dass bei einer Abweichung eines charakteristischen Parameters von einem Referenzwert, die ein vorbestimmtes Maß überschreitet oder in anderer Weise einen Defekt anzeigt, eine Meldung an eine den Betrieb der Arbeitsspindel steuernde elektronische Steuereinrichtung gesendet und/oder mittels einer Anzeigeeinrichtung ein optisches und/oder akustisches Warnsignal für Bedienpersonal ausgegeben wird.

2. Verfahren nach Anspruch 1, **dadurch gekennzeichnet, dass** als charakteristischer Parameter die bei einem vorbestimmten Weg wirkende Federkraft ermittelt wird.

3. Verfahren nach Anspruch 1 oder 2, **dadurch gekennzeichnet, dass** als charakteristischer Parameter aus der Federkraft als Funktion des Weges innerhalb eines vorbestimmten Bereiches des Weges eine Federkonstante oder ein Korrelationsfaktor, welcher ein Maß für die Ähnlichkeit zwischen dieser Funktion und einer vorbestimmten Funktion darstellt, berechnet wird.

4. Verfahren nach einem der Ansprüche 1 bis 3, **dadurch gekennzeichnet, dass** ein vollständiger Zyklus des Lösens und Spannens durchlaufen wird, und das als charakteristischer Parameter die dabei in Wärme umgewandelte Verlustenergie oder der Quotient aus der dabei in Wärme umgewandelten Verlustenergie und der dabei insgesamt aufgewendeten Arbeit berechnet wird.

5. Verfahren nach einem der Ansprüche 1 bis 4, **dadurch gekennzeichnet, dass** als charakteristischer Parameter ein Maß für die Abweichung der Federkraft als Funktion des Weges von einem linearen Verlauf innerhalb eines ersten vorbestimmten Bereiches des Weges, in dem eine möglichst geringe Abweichung von einem linearen Verlauf erwünscht ist, ermittelt wird.

6. Verfahren nach einem der Ansprüche 1 bis 5, **dadurch gekennzeichnet, dass** bei einem Lösevorgang als charakteristischer Parameter ein Maß für die Abweichung der Federkraft als Funktion des Weges von einem linearen Verlauf innerhalb eines zweiten vorbestimmten Bereiches des Weges, in dem eine Abweichung vorbestimmten Ausmaßes ein Indiz für ein korrektes Ausstoßen des Werkzeugs oder Werkzeughalters (4) aus der Werkzeugspannvorrichtung darstellt, ermittelt wird.

7. Verfahren nach einem der Ansprüche 1 bis 6, **dadurch gekennzeichnet, dass** als charakteristischer Parameter mindestens ein Zeitintervall zwischen zwei Zeitpunkten ermittelt wird, die vorbestimmten Änderungen des Kurvenverlaufes der Federkennlinie zugeordnet sind.

8. Verfahren nach Anspruch 7, **dadurch gekennzeichnet, dass** das Zeitintervall die Zeit zwischen der elektronischen Auslösung einer zum Lösen des Werkzeugs oder Werkzeughalters (4) führenden Bewegung und dem Beginn dieser Bewegung und/oder die Zeit zwischen dem Beginn einer zum Lösen des Werkzeugs oder Werkzeughalters (4) führenden Bewegung und einer Kraftbeaufschlagung der Federanordnung (14) und/oder die Zeit zwischen einer Kraftbeaufschlagung der Federanordnung (14) und dem Ausstoßen des Werkzeugs oder Werkzeughalters (4) ist.

9. Verfahren nach einem der Ansprüche 1 bis 8, **dadurch gekennzeichnet, dass** als charakteristischer Parameter die am Ende eines Lösevorgangs auftretende maximale Kraft ist, die bei der Begrenzung des Weges des Betätigungselementes (5) durch einen mechanischen Anschlag auftritt.

10. Verfahren nach einem der Ansprüche 1 bis 9, **dadurch gekennzeichnet, dass** der Referenzwert ein fest vorbestimmter Wert oder ein anhand eines früheren Löse- und Spannzyklus ermittelter Wert des charakteristischen Parameters ist, der in einem Datenspeicher einer zur Durchführung des Verfahrens vorgesehenen Überwachungseinrichtung gespeichert wurde.

11. Verfahren nach einem der Ansprüche 1 bis 10, **dadurch gekennzeichnet, dass** ermittelte Werte eines charakteristischen Parameters in einem Datenspeicher einer zur Durchführung des Verfahrens vorgesehenen Überwachungseinrichtung gespeichert werden, und dass anhand der gespeicherten Werte Änderungsraten berechnet und zur Prädiktion der zukünftigen zeitlichen Entwicklung des charakteristischen Parameters verwendet werden.

12. Verfahren nach einem der Ansprüche 1 bis 11, **dadurch gekennzeichnet, dass** die Federkraft indirekt gemessen wird, indem eine dieser entgegenwirkende hydraulische Kraft auf einen Kolben (18) einer hydraulischen Löseeinrichtung (2), welcher beim Lösen auf das Betätigungselement (5) eine Kraft in Richtung der Lösestellung ausübt, aus der Messung eines Drucks eines Hydraulikfluids und der von diesem Druck beaufschlagten Fläche des Kolbens (18) berechnet wird.

13. Verfahren nach Anspruch 12, **dadurch gekennzeichnet, dass** auf jeder axialen Seite des Kolbens (18) ein jeweils auf den Kolben (18) wirkender Druck des Hydraulikfluids gemessen wird, aus diesem Druck und der von ihm beaufschlagten Fläche der jeweiligen Seite des Kolbens (18) eine von dieser Seite auf den Kolben (18) wirkende Kraft berechnet wird und durch Bildung der Differenz dieser beiden Kräfte die resultierende hydraulische Kraft auf den Kolben (18), welche der Federkraft entgegenwirkt, berechnet wird.

## Claims

1. Method for monitoring a tool clamping device (1) mounted on a machine spindle and whose clamping force is generated by a spring assembly (14) which exerts a force in the direction of the clamping position on an actuating element (5) which brings about the clamping or release of a tool or tool holder (4), **characterized in that**, during the release and/or during the clamping of a tool or tool holder (4), the spring load and the path of the actuating element (5) are measured continuously and are each recorded as functions of time, and **in that** at least one parameter characteristic of the state of the tool clamping device (1) is determined from these recorded functions, a spring characteristic being determined from the spring load and the path as functions of time in the form of the spring load as a function of the path, and **in that**, in the event of a deviation of a characteristic parameter from a reference value, which deviation exceeds a predetermined level or otherwise indicates a defect, an indication is sent to an electronic control unit controlling the operation of the machine spindle and/or an optical and/or acoustic warning signal is output for operating personnel by means of a display device.

2. Method according to claim 1, **characterized in that** the spring load acting at a predetermined path is determined as the characteristic parameter.

3. Method according to claim 1 or 2, **characterized in that** a spring constant or a correlation factor is calculated as the characteristic parameter from the spring load as a function of the path within a predetermined range of the path, which characteristic parameter is a measure of the similarity between this function and a predetermined function.

4. Method according to one of the claims 1 to 3, **characterized in that** a complete cycle of releasing and clamping is run through, and that the energy loss converted into heat or the quotient of the energy loss converted into heat and the total work expended is calculated as the characteristic parameter.

5. Method according to any one of claims 1 to 4, **characterized in that** a measure of the deviation of the spring load as a function of path from a linear course is determined as the characteristic parameter within a first predetermined range of the path in which a deviation from a linear course as small as possible is desired.

6. Method according to any one of claims 1 to 5, **characterized in that**, during a release process, a measure of the deviation of the spring load as a function of the path from a linear course within a second predetermined range of the path, in which a deviation of predetermined extent is an indication of correct discharge of the tool or the tool holder (4) from the tool clamping device, is determined as the characteristic parameter.

7. Method according to one of claims 1 to 6, **characterized in that** at least one time interval between two points in time is determined as the characteristic parameter, which are assigned to predetermined changes in the course of the curve of the spring characteristic.

8. Method according to claim 7, **characterized in that** the time interval is the time between the electronic triggering of a movement leading to the release of the tool or the tool holder (4) and the start of this movement and/or the time between the start of a movement leading to the release of the tool or the tool holder (4) and a force application to the spring assembly (14) and/or the time between a force application to the spring assembly (14) and the discharge of the tool or the tool holder (4).

9. Method according to any one of claims 1 to 8, **characterized in that** the characteristic parameter is the maximum force occurring at the end of a release process when the path of the actuating element (5) is limited by a mechanical stop.

10. Method according to one of claims 1 to 9, **characterized in that** the reference value is a fixed predetermined value or a value of the characteristic parameter determined on the basis of a previous releasing and clamping cycle, which value has been stored in a data memory of a monitoring device provided for carrying out the method.

11. Method according to any one of claims 1 to 10, **characterized in that** determined values of a characteristic parameter are stored in a data memory of a monitoring device provided for carrying out the method, and **in that** rates of change are calculated on the basis of the stored values and are used to predict the future temporal development of the characteristic parameter.

12. Method according to one of claims 1 to 11, **characterized in that** the spring load is measured indirectly by calculating a hydraulic force counteracting it on a piston (18) of a hydraulic releasing device (2), which exerts a force in the direction of the release position on the actuating element (5) during release, from the measurement of a pressure of a hydraulic fluid and the area of the piston (18) acted upon by this pressure.

13. Method according to claim 12, **characterized in that** on each axial side of the piston (18) a respective pressure of the hydraulic fluid acting on the piston (18) is measured, from this pressure and the area of the respective side of the piston (18) acted upon by it a force acting from this side on the piston (18) is calculated and by forming the difference of these two forces the resulting hydraulic force on the piston (18), which counteracts the spring load, is calculated.

## Revendications

1. Procédé pour la surveillance d'un dispositif de serrage d'outil (1) monté dans une broche de travail, dont la force de serrage est produite par un ensemble à ressort (14), qui exerce sur un élément d'actionnement (5) provoquant le serrage ou desserrage d'un outil ou porte-outil (4) une force en direction de la position de serrage, **caractérisé en ce que** lors du desserrage et/ou lors du serrage d'un outil ou porte-outil (4) la force de ressort et la course de l'élément d'actionnement (5) sont mesurées en continu et enregistrées respectivement en tant que fonctions du temps, et qu'à partir de ces fonctions enregistrées au moins un paramètre caractéristique de l'état du dispositif de serrage d'outil (1) est déterminé, dans lequel à partir de la force de ressort et de la course en tant que fonctions du temps une courbe caractéristique charge-déflexion sous forme de la force de ressort est déterminée en tant que fonction de la course, et que lors d'un écart d'un paramètre caractéristique par rapport à une valeur de référence, qui dépasse une grandeur prédéfinie ou indique d'une autre manière un défaut, un message est envoyé à un système de commande électronique commandant le fonctionnement de la broche de travail et/ou un signal d'avertissement optique et/ou acoustique pour le personnel opérateur est délivré au moyen d'un système d'affichage.

2. Procédé selon la revendication 1, **caractérisé en ce que** la force de ressort agissant lors d'une course prédéfinie est déterminée en tant que paramètre caractéristique.

3. Procédé selon la revendication 1 ou 2, **caractérisé en ce qu'**une constante de rappel ou un facteur de corrélation, lequel représente une grandeur pour la similitude entre cette fonction et une fonction prédéfinie, est calculé(e) en tant que paramètre caractéristique à partir de la force de ressort en tant que fonction de la course à l'intérieur d'une zone prédéfinie de la course.

4. Procédé selon l'une quelconque des revendications 1 à 3, **caractérisé en ce qu'**un cycle complet du desserrage et serrage est parcouru, et que l'énergie perdue ainsi convertie ou le quotient de l'énergie perdue ainsi convertie en chaleur et du travail consacré au total est calculé(e) en tant que paramètre caractéristique.

5. Procédé selon l'une quelconque des revendications 1 à 4, **caractérisé en ce qu'**une grandeur pour l'écart de la force de ressort en tant que fonction de la course par rapport à une variation linéaire à l'intérieur d'une première zone prédéfinie de la course, dans laquelle un écart le plus petit possible par rapport à une variation linéaire est souhaité, est déterminée en tant que paramètre caractéristique.

6. Procédé selon l'une quelconque des revendications 1 à 5, **caractérisé en ce que** lors d'un processus de desserrage une grandeur pour l'écart de la force de ressort en tant que fonction de la course par rapport à une variation linéaire à l'intérieur d'une deuxième zone prédéfinie de la course, dans laquelle un écart de dimension prédéfinie représente un indice pour une éjection correcte de l'outil ou du porte-outil (4) du dispositif de serrage d'outil, est déterminée en tant que paramètre caractéristique.

7. Procédé selon l'une quelconque des revendications 1 à 6, **caractérisé en ce qu'**au moins un intervalle de temps entre deux moments, qui sont associés à des modifications prédéfinies de la variation de courbe de la courbe caractéristique charge-flexion, est déterminé en tant que paramètre caractéristique.

8. Procédé selon la revendication 7, **caractérisé en ce que** l'intervalle de temps est le temps entre le déclenchement électronique d'un mouvement entraînant le desserrage de l'outil ou du porte-outil (4) et le début de ce mouvement et/ou le temps entre le début d'un mouvement entraînant le desserrage de l'outil ou du porte-outil (4) et une soumission à une force de l'ensemble à ressort (14) et/ou le temps entre une soumission à une force de l'ensemble à ressort (14) et l'éjection de l'outil ou du porte-outil (4).

9. Procédé selon l'une quelconque des revendications 1 à 8, **caractérisé en ce que** la force maximale se produisant à la fin d'un processus de serrage, qui se produit lors de la limitation de la course de l'élément d'actionnement (5) par une butée mécanique, est en tant que paramètre caractéristique.

10. Procédé selon l'une quelconque des revendications 1 à 9, **caractérisé en ce que** la valeur de référence est une valeur fixement prédéfinie ou une valeur déterminée sur la base d'un cycle de desserrage et de serrage antérieur du paramètre caractéristique, qui a été mise en mémoire dans une mémoire de données d'un système de surveillance prévu pour la mise en œuvre du procédé.

11. Procédé selon l'une quelconque des revendications 1 à 10, **caractérisé en ce que** des valeurs déterminées d'un paramètre caractéristique sont mises en mémoire dans une mémoire de données d'un système de surveillance prévu pour la mise en œuvre du procédé, et que sur la base des valeurs mises en mémoire des taux de modification sont calculés et utilisés pour la prédiction de l'évolution temporelle future du paramètre caractéristique.

12. Procédé selon l'une quelconque des revendications 1 à 11, **caractérisé en ce que** la force de ressort est mesurée indirectement, du fait qu'une force hydraulique contrecarrant celle-ci sur un piston (18) d'un système de desserrage hydraulique (2), lequel lors du desserrage exerce une force en direction de la position de desserrage sur l'élément d'actionnement (5), est calculée à partir de la mesure d'une pression d'un fluide hydraulique et de la surface du piston (18) sollicitée par cette pression.

13. Procédé selon la revendication 12, **caractérisé en ce que** sur chaque face axiale du piston (18) une pression du fluide hydraulique agissant respectivement sur le piston (18) est mesurée, une force agissant à partir de cette face sur le piston (18) est calculée à partir de cette pression et de la surface sollicitée par celle-ci de la face respective du piston (18) et la force hydraulique résultante sur le piston (18), laquelle contrecarre la force de ressort, est calculée par formation de la différence de ces deux forces.
